# EUROPEAN PATENT SPECIFICATION

(11) **EP 2 120 016 B1**
(45) Date of publication and mention of the grant of the patent: **13.07.2011**
(21) Application number: 08156399.1
(22) Date of filing: 16.05.2008
(51) Int. Cl.: G01D 4/00

(54) **Utility management system**
System zur Verwaltung von Dienstprogrammen
Système de gestion de fonctionnalités

(43) Date of publication of application: 18.11.2009
(73) Proprietor: Smartdutch B.V., 1016 DS Amsterdam (NL)
(72) Inventor: van Kempen, Gert, 1016 DS Amsterdam (NL)
(74) Representative: Van Breda, Jacobus

(56) References cited:
- WO-A2-2006/084462
- US-A1- 2004 064 276
- US-A1- 2007 096 765
- ANONYMOUS: "Automated Meter Reading" LACLEDE GAS - CUSTOMER SERVICE, [Online] 24 May 2007 (2007-05-24), XP002516196 Retrieved from the Internet: URL:http://www.lacledegas.com/customer/met er.php> [retrieved on 2009-02-20]

## Description

The invention relates to a utility management system comprising at least one meter for registering the domestic or industrial use of gas, water and/or electricity, which at least one meter is identified by a unique serial number assigned to and incorporated in said meter.

It is known that utility meters that are in use for measuring the use of gas, water and/or electricity are provided in the factory with a unique serial number identifying each such meter. Whenever a gas, water or electricity meter is installed or replaced the unique serial number of such meter is noted down by hand for further processing at a later stage. Evidently, mistakes happen at the time that the serial numbers are noted and also when the serial numbers are further processed, for instance when these numbers are included in a database linking the numbers to the addresses where the meters are installed.

A further problem is that registering the consumption as mentioned by the utility meters is done in the prior art by a person reading out the meters and processing the consumption quantities thereafter. Similarly, also in this process errors do occur. Moreover, the prior art method of collecting data and registering the collected information is labour-intensive and therefore costly.

W02006/084462 discloses a utility management system comprising at least one meter for registering the domestic or industrial use of gas, water and/or electricity, which at least one meter is identified by a unique serial number assigned to and incorporated in said meter, wherein the at least one meter is connected or connectable to a communication network, which network connects to an information collecting and storing system that is arranged to keep track of the domestic or industrial usage as measured by said at least one meter and to receive and register the unique serial number incorporated in said meter, and which information collecting and storing system further comprises a database linking the said meter identified by said unique serial number to an address. The necessity to apply labour for the collection of the required meter-information can thus completely be ruled out, making this known utility management system very cost-effective and also resistant to man-caused errors in relation to reading out the consumption as measured by the meters as well as in relation to registering the serial numbers that identify the meters that are connected to the network.

The utility management system of the invention is provided with a breaker switch near to the at least one meter or for instance forming part of such meter, and has the feature that this breaker switch is arranged to cause the generation of a signal to which the information collecting and storing system is sensitive and which induces it to collect the unique serial number of the at least one meter. This ensures that the information collecting and storing system will only collect the required information as to the identity of the at least one meter when this is required. Unnecessary information traffic in the network can thus be avoided.

The operation of the information collecting and storing system to gather the unique serial number of the at least one meter can advantageously be induced by the breaker switch such that the breaker switch causes the generation of the signal to which the information collecting and storing system is sensitive, upon activation of the breaker switch. Upon each activation of the breaker switch a 'refreshing' of the serial numbers as comprised in the information collecting and storing system thus occurs.

It is preferred that the information collecting and storing system is arranged to collect the unique serial number incorporated in the at least one meter, as opposed to the meters transmitting this information on their own motion.

In connection therewith it is further preferable that the information collecting and storing system is sensitive to an external signal inducing it to collect the unique serial number of the at least one meter.

Again, to prevent unnecessarily causing information traffic in the network it is possible that the information collecting and storing system is arranged to receive and register the unique serial number incorporated in said at least one meter only a first time that this system collects and registers said unique serial number.

The utility management system of the invention is advantageously executed such that the information-collecting and storing system is arranged to simultaneously or consecutively collect the unique serial numbers of a gas meter, a water meter and/or an electricity meter that are located at the same address.

The invention will hereinafter be further elucidated with reference to a schematic drawing showing an example of a utility management system according to the invention.

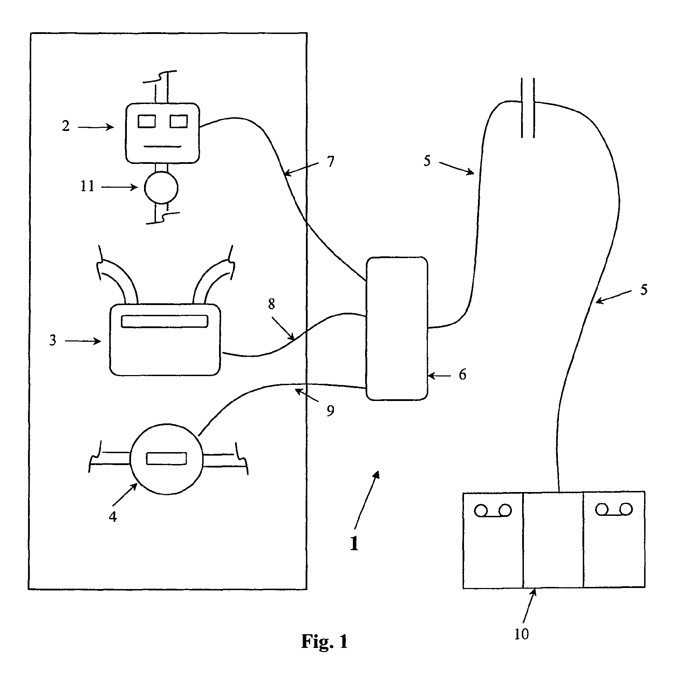

In the drawing of a single figure 1 the utility management system 1 of the invention comprises in the shown example an electricity meter 2, a gas meter 3 and a water meter 4.Each of said meters 2,3,4 is identifiable by a unique serial number that is assigned to each of said meters 2,3,4 in the factory. Said unique serial numbers are therefore incorporated in the meters and remotely readable by electronic means. To this end each of the meters 2,3,4 is connected or at least connectable to a communication's network 5 to which the meters 2,3,4 connect through a communication port 6, and to which communication port 6 each of the meters 2,3,4 is connected by a signal line 7,8,9.

The figure also shows that the network 5 connects to an information collecting and storing system 10. This information collecting and storing system 10 is arranged to keep track through the network 5 of the domestic or industrial usage of gas, water and/or electricity as measured by each of the said meters 2,3,4. Further, the information collecting and storing system 10 is arranged to receive and register the unique serial numbers incorporated in each of said meters 2,3,4. Further, the information collecting and storing system 10 comprises a database linking each of the meters 2,3,4 identified by their unique serial numbers to an address (a street address) where the meters 2,3,4 are located. This address may identify with a billing address for the consumption of gas, water and/or electricity as monitored by each of the meters 2,3,4.

Fig. 1 further shows that there is provided a breaker switch 11, which in its most usual embodiment forms part of the electricity meter 2 and has the basic function of interrupting or allowing electricity consumption at the facility where the (electricity) meter is located.

The breaker switch 11 is arranged to cause the generation of a signal that is communicated through the network 5 and to which the information collecting and storing system 10 is sensitive, and which induces said system 10 to collect the unique serial numbers of each of the meters 2,3,4. The breaker switch 11 is to this end arranged to cause the generation of said signal upon activation of the breaker switch 11 by hand.

In use the utility management system 1 of the invention operates such that the information collecting and storing system 10 receives and registers the unique serial numbers incorporated in said meters 2,3,4 each time that this information collecting and storing system 10 collects and registers the unique serial numbers of said meters.

It can further be noted that the information collecting and storing system 10 is arranged to either simultaneously or consecutively collect the unique serial numbers of the gas meter 3, the water meter 4 and/or the electricity meter 2 that are located at the same address.

## Claims

1. Utility management system (1) comprising at least one meter (2,3,4) for registering the domestic or industrial use of gas, water and/or electricity, that is provided with a breaker-switch (11) where the at least one meter (2,3,4) is located, which at least one meter is identified by a unique serial number assigned to and incorporated in said meter, wherein the at least one meter (2,3,4) is connected or connectable to a communication network (5), which network (5) connects to an information collecting and storing system (10) that is arranged to keep track of the domestic or industrial usage as measured by said at least one meter and to receive and register the unique serial number incorporated in said meter (2,3,4), and which information collecting and storing system (10) further comprises a database linking the said meter (2,3,4) identified by said unique serial number to an address, **characterized in that** the breaker switch is arranged to cause the generation of a signal to which the information collecting and storing system (10) is sensitive and which induces it to collect the unique serial number of the at least one meter (2,3,4).

2. Utility management system according to claim 1, **characterized in that** the breaker switch (11) is arranged to cause the generation of the signal upon activation of the breaker switch (11).

3. Utility management system according to claim 1 or 2, **characterized in that** the information collecting and storing system (10) is arranged to collect the unique serial number incorporated in the at least one meter (2,3,4).

4. Utility management system according to any of claims 1-3, **characterized in that** the information collecting and storing system is sensitive to an external signal inducing it to collect the unique serial number of the at least one meter (2, 3, 4).

5. Utility management system according to any of claims 1-4, **characterized in that** the information collecting and storing system (10) is arranged to receive and register the unique serial number incorporated in said at least one meter only a first time that this system collects and registers said unique serial number.

6. Utility management system according to any of the preceding claims, **characterized in that** the information-collecting and storing system is arranged to simultaneously or consecutively collect the unique serial numbers of a gas meter, a water meter and/or an electricity meter that are located at the same address.

## Patentansprüche

1. Versorgungs-Verwaltungssystem (1), das mindestens einen Zähler (2, 3, 4) zum Aufzeichnen des Haushalts- oder Industrie-Verbrauchs von Gas, Wasser und/oder Strom aufweist, das dort, wo der mindestens eine Zähler (2, 3, 4) angeordnet ist, mit einem Unterbrechungsschalter (11) versehen ist, wobei der mindestens eine Zähler durch eine einzigartige Seriennummer identifiziert ist, die dem Zähler zugeordnet und in diesen integriert ist, wobei der mindestens eine Zähler (2, 3, 4) mit einem Kommunikationsnetzwerk (5) verbunden oder verbindbar ist, wobei das Netzwerk (5) mit einem Informations-Erfassungs- und Speichersystem (10) verbunden ist, das zum Zählen des von dem mindestens einen Zähler gemessenen Haushalts- oder Industrie-Verbrauchs und zum Empfangen und Aufzeichnen der in den Zähler (2, 3, 4) integrierten einzigartigen Seriennummer eingerichtet ist, und wobei das Informations-Erfassungs- und Speichersystem (10) ferner eine Datenbank aufweist, die den durch die einzigartige Seriennummer identifizierten Zähler (2, 3, 4) mit einer Adresse verknüpft, **dadurch gekennzeichnet, dass** der Unterbrechungsschalter derart eingerichtet ist, dass er das Erzeugen eines Signals bewirkt, demgegenüber das Informations-Erfassungs- und Speichersystem (10) empfänglich ist und welches es zum Erfassen der einzigartigen Seriennummer des mindestens einen Zählers (2, 3, 4) veranlasst.

2. Versorgungs-Verwaltungssystem gemäß Anspruch 1, **dadurch gekennzeichnet, dass** der Unterbrechungsschalter (11) zum Bewirken des Erzeugens des Signals bei Aktivierung des Unterbrechungsschalters (11) eingerichtet ist.

3. Versorgungs-Verwaltungssystem gemäß Anspruch 1 oder 2, **dadurch gekennzeichnet, dass** das Informations-Erfassungs- und Speichersystem (10) zum Erfassen der in den mindestens einen Zähler (2, 3, 4) integrierten einzigartigen Seriennummer eingerichtet ist.

4. Versorgungs-Verwaltungssystem gemäß einem der Ansprüche 1 bis 3, **dadurch gekennzeichnet, dass** das Informations-Erfassungs- und Speichersystem einem externen Signal gegenüber empfänglich ist, welches es zum Erfassen der einzigartigen Seriennummer des mindestens einen Zählers (2, 3, 4) veranlasst.

5. Versorgungs-Verwaltungssystem gemäß einem der Ansprüche 1 bis 4, **dadurch gekennzeichnet, dass** das Informations-Erfassungs- und Speichersystem (10) zum Empfangen und Aufzeichnen der in den mindestens einen Zähler integrierten einzigartigen Seriennummer nur bei einem ersten Mal, bei dem das System die einzigartige Seriennummer erfasst und aufzeichnet, eingerichtet ist.

6. Versorgungs-Verwaltungssystem gemäß einem der vorhergehenden Ansprüche, **dadurch gekennzeichnet, dass** das Informations-Erfassungs- und Speichersystem zum gleichzeitigen oder aufeinanderfolgenden Erfassen der einzigartigen Seriennummern eines Gaszählers, eines Wasserzählers und/oder eines Stromzählers eingerichtet ist, die sich unter derselben Adresse befinden.

## Revendications

1. Système de gestion de fonctionnalités (1) comprenant au moins un compteur (2, 3, 4) pour enregistrer la consommation ménagère ou industrielle de gaz, d'eau et/ou d'électricité, qui est équipé d'un disjoncteur (11) à l'endroit où le au moins un compteur (2, 3, 4) est placé, lequel au moins un compteur étant identifié par un numéro de série unique attribué et incorporé audit compteur, système dans lequel le au moins un compteur (2, 3, 4) est connecté ou peut être connecté à un réseau de communication (5), lequel réseau (5) étant connecté à un système de collecte et de stockage d'informations (10) qui est agencé pour conserver la trace de la consommation ménagère ou industrielle telle que mesurée par ledit au moins un compteur et pour recevoir et enregistrer le numéro de série unique incorporé dans ledit compteur (2, 3, 4), et lequel système de collecte et de stockage d'informations (10) comprenant en outre une base de données qui associe ledit compteur (2, 3, 4) identifié par ledit numéro de série unique à une adresse, **caractérisé en ce que** le disjoncteur est agencé pour provoquer la génération d'un signal auquel le système de collecte et de stockage d'informations (10) est sensible et qui l'incite à collecter le numéro de série unique du au moins un compteur (2, 3, 4).

2. Système de gestion de fonctionnalités selon la revendication 1, **caractérisé en ce que** le disjoncteur (11) est agencé pour provoquer la génération du signal lors de l'activation du disjoncteur (11).

3. Système de gestion de fonctionnalités selon la revendication 1 ou 2, **caractérisé en ce que** le système de collecte et de stockage d'informations (10) est agencé pour collecter le numéro de série unique incorporé dans le au moins un compteur (2, 3, 4).

4. Système de gestion de fonctionnalités selon l'une quelconque des revendications 1-3, **caractérisé en ce que** le système de collecte et de stockage d'informations est sensible à un signal extérieur l'incitant à collecter le numéro de série unique du au moins un compteur (2, 3, 4).

5. Système de gestion de fonctionnalités selon l'une quelconque des revendications 1-4, **caractérisé en ce que** le système de collecte et de stockage d'informations (10) est agencé pour recevoir et enregistrer le numéro de série unique incorporé dans ledit au moins un compteur seulement la première fois que ce système de collecte et de stockage d'informations enregistre ledit numéro de série unique.

6. Système de gestion de fonctionnalités selon l'une quelconque des revendications précédentes, **caractérisé en ce que** le système de collecte et de stockage d'informations est agencé pour collecter simultanément ou consécutivement les numéros de série uniques d'un compteur de gaz, d'un compteur d'eau et/ou d'un compteur d'électricité qui sont situés à la même adresse.
